# EUROPEAN PATENT APPLICATION

(11) **EP 4 574 635 A1**
(43) Date of publication of application: **25.06.2025**
(21) Application number: 23219560.2
(22) Date of filing: 21.12.2023
(51) Int. Cl.: B62D 55/084, B62D 55/14, B62D 55/24

(54) **TRACK UNIT FOR A WORK VEHICLE**

(71) Applicant: CNH Industrial Belgium N.V., 8210 Zedelgem (BE)
(72) Inventor: DECLERCQ, Wim, 8210 Zedelgem (BE); DE BROUWER, Bart, 8210 Zedelgem (BE); SOMERS, Tom, 8210 Zedelgem (BE); SOUZA, Thiago, 8210 Zedelgem (BE)
(74) Representative: CNH Industrial IP Department

(57) **Abstract**

The track unit includes a belt track (4) driven by a drive sprocket wheel (3) and guided by guide wheels (5) and support rollers (6). The belt track comprises a core (10) with drive lugs (11) on the inner surface of the core and ground-engaging lugs (15) arranged in two parallel rows on the outer surface (13) of the core. Each ground-engaging lug comprises a load-bearing portion (15a) defined as a portion of the lug lying within one of the contact strips (25) of the core, wherein the contact strips are lateral parts of the core directly contacted by the guide wheels (5) and/or support rollers (6) when the belt track is moving. According to one set of embodiments, the ground-engaging lugs (15) have uniform resilience and do not or not substantially overlap the central portion (26) of the core between the contact strips (25). According to other embodiments, the ground-engaging lugs (15) comprise a non load-bearing portion (15b) overlapping the central portion, wherein the non load-bearing portion is at least partially thinner or more resilient than the load-bearing portion.

## Description

### Field of the Invention

The present invention is related work vehicles, primarily but not exclusively to agricultural work vehicles such as tractors, combine harvesters or forage harvesters. The invention is in particular related to track units for such work vehicles.

### State of the art.

As the dimensions of presently developed agricultural vehicles are getting bigger, it is often required to replace two or all four of the traditional wheels of these machines by track units, to reduce ground compaction, increase grip and/or prevent the vehicle from getting stuck in the mud.

Such track units therefore need to be able to undergo large forces without substantial damage during a significant lifetime. Premature damage to the belt track of a track unit is especially undesirable in view of the cost and time required to replace the belt track.

### Summary of the invention

The invention is related to a track unit and to a work vehicle equipped with said track unit as described in the appended claims. The track unit includes a belt track driven by a drive sprocket wheel and guided by guide wheels and support rollers. The belt track comprises a core with drive lugs on the inner surface of the core and ground-engaging lugs arranged in two parallel rows on the outer surface of the core. The ground-engaging lugs are also sometimes called tread bars. Each ground-engaging lug comprises a load-bearing portion defined as a portion of the lug lying within one of the contact strips of the core, wherein the contact strips are lateral parts of the core directly contacted by the guide wheels and/or support rollers when the belt track is moving. According to one set of embodiments, the ground-engaging lugs have uniform resilience and do not or not substantially overlap the central portion of the core, defined as the portion of the core extending between the contact strips. According to other embodiments, the ground-engaging lugs comprise a non load-bearing portion overlapping the central portion of the core, wherein the non load-bearing portion is at least partially thinner than the load-bearing portion or wherein the non load-bearing portion is more resilient than the load-bearing portion.

One of the guide wheels may also act as the drive sprocket wheel. Instead of a sprocket wheel, the belt can also be driven by a friction drive wheel.

A more resilient portion is a portion which is more compressible and/or will flatten more under the same load as a less resilient portion, and/or a portion which will wear out more quickly and/or more easily compared to a less resilient portion.

The invention enables the ground engaging lugs to wear down evenly in the portion of the lugs directly subjected via the guide wheels and/or the support rollers to the weight of a work vehicle, thereby solving the problem of uneven wear of prior art belt tracks in the direction perpendicular to the belt track centre line.

The invention is related also to a work machine, such as a tractor, comprising an even number of track units in accordance with the invention, for example two track units and two wheels, or four track units.

The invention is related also to a work machine, such as a combine harvester or a forage harvester, comprising an even number of track units in accordance with the invention, for example two track units and two wheels, or four track units.

The invention is also related to a method to convert a belt track for use in a track unit according to the invention by at least partially removing the ground-engaging lugs where the ground-engaging lugs overlap the central portion of the core.

### Brief description of the figures

Figure 1 illustrates an example of a work machine, in this case a tractor wherein the wheels have been replaced by track units.
Figure 2 illustrates the main components of a track unit as known in the prior art.
Figure 3 illustrates a cross section and plane view of the ground-engaging side of a prior art belt track showing also the position of one set of support rollers in cross section.
Figure 4 is a more detailed cross section and plane view, indicating a number of specific features of the prior art track.
Figures 5 and 6 illustrate a first embodiment of a track unit according to the invention.
Figures 7 to 12 illustrate alternative embodiments of track units according to the invention.

### Detailed description of preferred embodiments of the invention

Preferred embodiments will now be described with reference to the drawings. The detailed description is not limiting the scope of the invention, which is defined only by the appended claims.

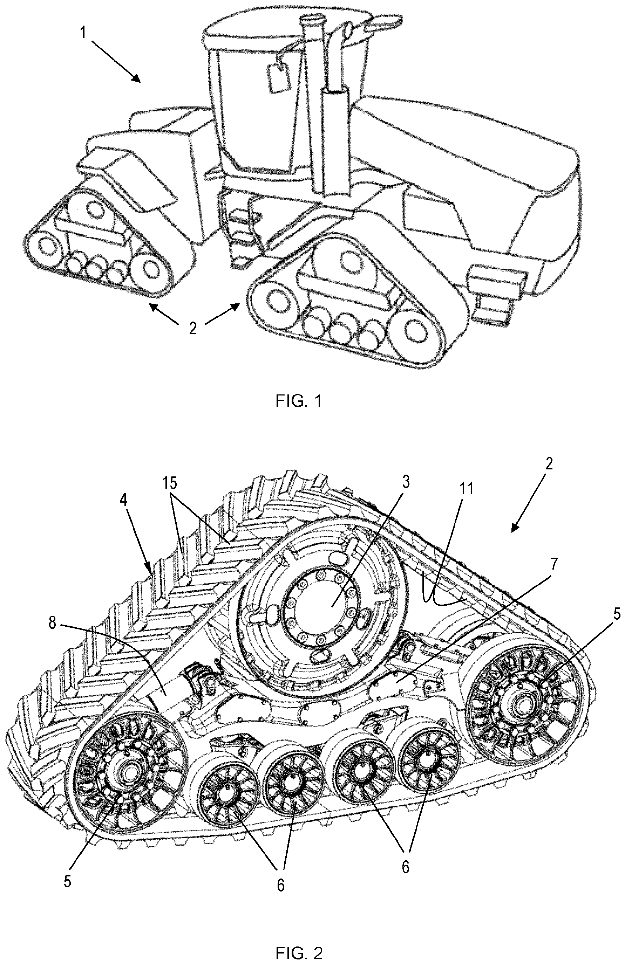

Figure 1 illustrates a tractor 1 wherein the four wheels have been replaced by track units 2. The track units for tractors with two track units, typically at the rear, and two wheels, typically at the front, are similar. Also the track units for combine or forage harvesters with track units, typically at the front, and two wheels, typically at the rear, are similar. A more detailed image of one track unit 2 as presently known in the art is illustrated in Figure 2. The track unit comprises a sprocket wheel 3 configured to be coupled to one of usually four rotatable axles of a work vehicle. The rotation of the sprocket wheel 3 drives the movement of a belt track 4 that is guided by front and rear guide wheels 5 and supported on the ground by support rollers 6. The track unit as shown in Figure 2 has four support rollers 6, but the invention also applies to track units with a different number of support rollers 6, for example two or three support rollers 6. The guide wheels 5 and the support rollers 6 are rotatably mounted on a track unit frame 7. A variable length actuator 8 is configured to tension the belt track 4 by actuating one pair of guide wheels 5.

In other track units, one of the guide wheels 5 is the drive sprocket wheel 3. In even other track units, the drive sprocket wheel drives the belt track by friction and not, or not continuously, by driving the drive lugs. The invention at hand also applies to these track units which exhibit the same problem as described further below.

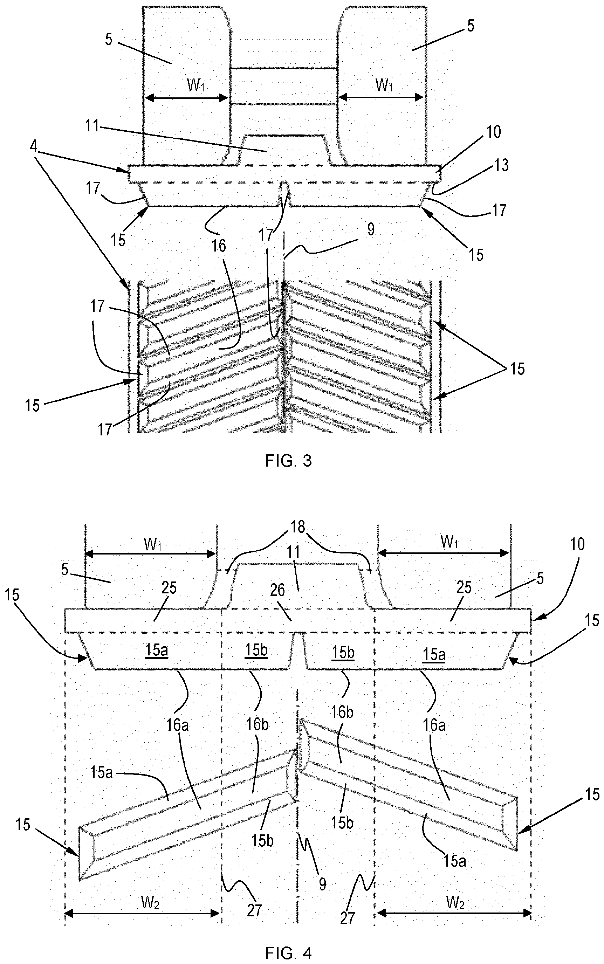

The belt track 4 itself is formed of resilient material like rubber or any equivalent material. The belt track 4 may comprise different types of rubber, for example laminated in different layers, and several fillers may be present in the rubber, for example to enhance certain properties, like wear resistance or thermal conductivity. Figure 3 shows a cross section and a plane view of a portion of the ground-engaging side of the prior art belt track 4. The belt track 4 extends along a longitudinal belt track centre line 9 and comprises a reinforced core 10 formed of a resilient matrix with reinforcement elements (not shown) embedded in said matrix. These reinforcement elements may include yarns and/or cords/cables made out of high strength materials, typically fibres or filaments, like aramid fibres, PP and/or PE fibres, and/or steel filaments. The yarn or cord/cable may be wound in serpentine fashion along a circumferential section of the core 10, and additional reinforcement mats or weaves may be reinforcing the core. On the inner surface of the core 10, the belt track comprises regularly spaced drive lugs 11 configured to engage with the sprocket wheel 3 in the manner of a toothed belt. The cross section in Figure 3 also shows one pair of guide wheels 5. The guide wheels 5 of this pair are spaced apart in the direction perpendicular to the belt track centre line 9, so as to allow space for the passage of the drive lugs 11. The support rollers 6 are equally arranged in spaced-apart pairs, usually mounted on bogeys (not shown) suspended from the track unit frame 7. The width of the support rollers 6 may be slightly smaller than the width W₁ of the guide wheels 5.

Ground-engaging lugs 15 formed of rubber or rubber-like material are attached to or integral with the outer surface 13 of the core 10. The material is resilient but of sufficient hardness to enable the lugs 15 to obtain a strong grip on the terrain onto which the track unit 2 is moving. The ground-engaging lugs 15 are regularly spaced apart, oriented at a slanted angle relative to the track's longitudinal belt track centre line 9 and arranged in two rows extending on either side of said belt track centre line 9, and staggered one relative to the other. Each ground-engaging lug 15 is shaped as a uniform volume comprising a ground-contacting surface 16 oriented parallel to the outer surface 13 of the core 10 and sloping sidewalls 17 on all four sides of the surface 16. This arrangement of the ground-engaging lugs 15 ensures a strong grip on the terrain as the track unit 2 moves forward or backward. The thickness of the ground-engaging lugs 15 is defined as the distance between the outer surface 13 of the core 10 and the ground contacting surface 16.

The reinforcement present in the core can also extend into the drive lugs 11 and/or ground-engaging lugs 15.

Reference is made also to Figure 4, showing a more detailed image of both the cross section and the plane view of the ground-engaging side of the prior art track. In the plane view, only two ground-engaging lugs 15 are shown on each side of the belt track centre line 9 in order to indicate a number of specific features. Besides engaging with the sprocket wheel 3, the drive lugs 11 also have the function of limiting sideways movement of the belt track 4 relative to the guide wheels 5 and support rollers 6. Small clearances 18 between the drive lugs 11 and the guide wheels 5 nevertheless enable the belt track 4 to undergo a limited sideways movement relative to the track unit frame 7 when the belt track is moving, referred to as a 'snaking' movement. So in practice, the contact between the guide wheels 5 and/or support rollers 6 on the one hand and the belt track 4 on the other hand takes place in two contact strips 25 on either side of the drive lugs 11, said strips 25 having width W₂ indicated in Figure 4. The contact strips 25 are defined herein as lateral portions of the core 10 of the belt track 4, located on either side of a central portion 26 of the core 10, with boundaries 27 between the contact strips 25 and the central portion 26.

As seen in the cross section in Figure 4, the width W₂ of the contact strips 25 is lower than the projected width of the ground-engaging lugs 15 (i.e. the width of the lugs as projected on the plane of the drawing in Figure 4). A distinction can therefore be made between two portions of the ground-engaging lugs 15, separated by the boundary 27 of one of the contact strips 25 : a load-bearing portion 15a and a non load-bearing portion 15b, respectively comprising ground contacting surfaces 16a and 16b. The load-bearing portion 15a is the part of the lug that lies within the boundaries of the contact strip 25. This portion 15a therefore directly receives the load force of the vehicle acting through the guide wheels 5 and support rollers 6. The non load-bearing portion 15b extends beyond the contact strip 25, overlapping the central portion 26 of the core 10 and receives no direct vertical weight component through the guide wheels 5 and support rollers 6, hence the name 'non load-bearing' which is not intended to indicate that no loads are acting on this portion, but rather to distinguish this portion from portion 15a. Nevertheless, the load exerted on the load-bearing portions 15a of the lugs 15 is higher than on the non load-bearing portions 15b. This may lead to uneven wear of the ground-engaging lugs 15 : the ground engaging lugs 15 wear down faster in the areas corresponding to the contact strips 25, while the centrally placed portions of the lugs wear down slower. Especially when driving on the road, this type of wear might happen. Typically, one will observe that the thickness of the ground engaging lugs 15 increases from the side of the belt track 4 to the centre line 9. This uneven wear may lead to a lateral bending of the track 4 which puts a significant strain on the core of the belt track 4, especially in het zone nearby the boundary 27. This lateral bending happens every time the belt track 4 is pushed on the ground, carrying the weight of the vehicle, as it passes under the support rollers, but is again more or less released as the belt track 4 goes around the guide wheel and again up over the sprocket wheel. This cyclic bending in the zone nearby the boundary 27 may lead to increased temperature of the belt track 4 in that zone, rubber degradation, rubber cracking and even cause the reinforcement to get pulled out of the belt track 4 in that zone.

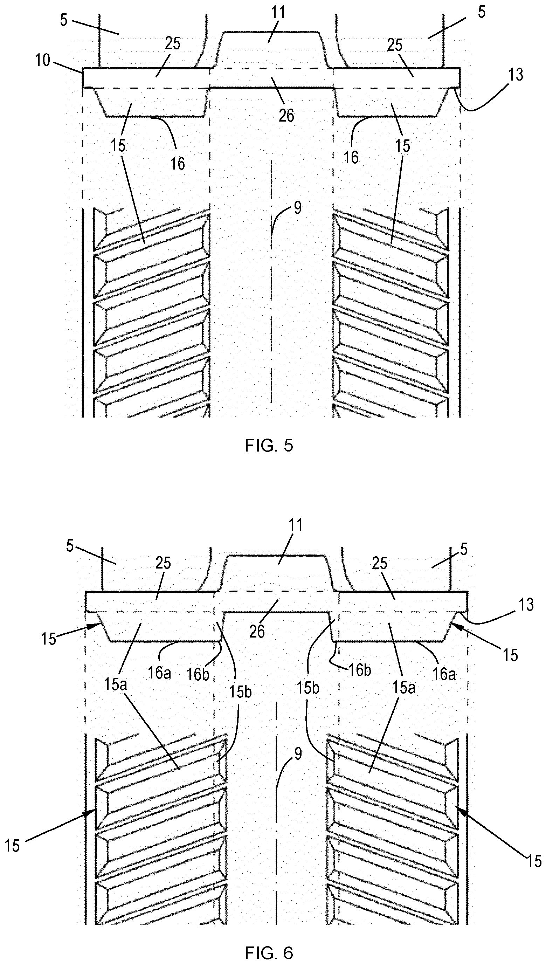

A first way of solving this problem in accordance with the invention is by applying ground-engaging lugs 15 having a load-bearing portion of uniform resilience, but wherein the ground-engaging lugs 15 do not or not substantially overlap the central portion 26 of the core 10 between the contact strips 25. A first example of this embodiment is shown in Figure 5. The ground-engaging lugs 15 are formed of a uniform material and have a constant thickness as defined by the distance between the ground contacting surface 16 and the outer surface 13 of the core 10, but they are shorter than the lugs of the prior art belt track, and placed within the boundaries of the contact strips 25, i.e. the lugs 15 do not overlap the central portion 26 of the core 10. As a consequence, the lugs 15 are loaded evenly across their contact surface 16 with the terrain and will also wear down evenly in the course of time.

As stated, the lugs 15 according to this embodiment do not or not substantially overlap the central portion 26 between the contact strips 25. The term 'substantially' is intended to include belt tracks wherein a small portion of the ground-engaging lugs 15 does overlap said central portion 26, without however overlapping a substantial part of said central portion, for example more than 25% of the width of said central portion 26 according to a particular embodiment, or more than any of the following percentages of said width : 20%, 15%, 10% or 5% according to further embodiments. In the belt track shown in Figure 6 for example, the ground-engaging lugs 15 overlap the central portion 26 to a small extent, but this belt track is still in accordance with the embodiment of the invention according to which the ground-engaging lugs 'do not substantially overlap the central portion'. The lugs in this case have a load-bearing portion 15a lying within the boundaries of the contact strips 25 and a small non load-bearing portion 15b extending beyond the boundaries 27 between the contact strips 25 and the central portion 26 of the core. More generally, on any track unit according to this embodiment, a significant central portion of the belt track is not covered with ground-engaging lugs. These solutions therefore inherently reduce the grip on the terrain to some degree. Nevertheless, this may be acceptable for certain types of work machines working on specific types of terrain.

For tractors, grip is often very important, as it will determine the maximum pulling power. More pulling power might enable to use a plough with more mould boards, so that less passes over the field are required to plough it, increasing efficiency for the farmer. Also for other applications, the pulling power might determine the maximum working width, like sowing. However, harvesters, like combine harvesters and forage harvesters, are not used to pull something over the field, so a lot of pulling power as such is not required. The advantages that the use of track units bring to harvesters are : the track units with their bigger footprint reduce ground compaction caused by the heavy harvester, and the track units also prevent the harvester to get stuck on the field in difficult conditions, for example on a very muddy field. Harvesters also require some grip to make the heavy harvester move forward. So, track units with less grip but longer lifetime, because the ground engaging lugs wear out more evenly reducing, or even avoiding, the problem of lateral bending, might bring more value to the user of the harvester.

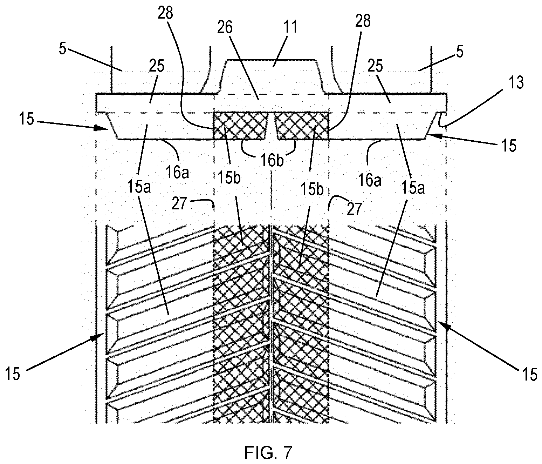

Alternative embodiments of the invention do take into account the impact on the grip by providing ground-engaging lugs comprising a non load-bearing portion that does overlap the central portion 26 of the core 10, but wherein the non load-bearing portion is at least partially thinner and/or more resilient compared to the load-bearing portion. A more resilient portion is a portion which is more compressible and/or will flatten more under the same load as a less resilient portion, and/or a portion which will wear out more quickly and/or more easily compared to a less resilient portion. A first embodiment that answers to that description is illustrated in Figure 7. The ground-engaging lugs 15 again comprise a load-bearing portion 15a and a non load-bearing portion 15b. The load-bearing portion 15a has a constant thickness as defined by the distance from the ground contacting surface 16a to the outer surface 13 of the core 10, and is formed integrally of a material having a resilience in the same order of magnitude as the ground-engaging lugs in the prior art belt tracks, while the non load-bearing portion 15b is formed of a more resilient material than the load-bearing portion 15a, i.e. the non load-bearing portion 15b is more compressible and/or will flatten more under the same load, and/or will wear out more quickly and/or more easily than the load-bearing portion 15a while being nevertheless rigid enough to provide adequate grip on the terrain. The portions 15a and 15b in this case are fully coinciding with two parts of the lug, having different resilience and which are fixed to each other along an interface 28 by gluing or any other equivalent attachment means so as to form a single ground-engaging lug 15. The non load-bearing portion 15b has the same thickness as the load-bearing portion 15a, as defined by the ground contacting surface 16b. The difference in resilience is such that when the load-bearing portion 15a grows thinner by wear, the non load-bearing portion 15b may either wear down at the same rate, or faster than the load-bearing portion, or if this is not the case, it is compressed under the weight of the load. Either way, the load-bearing portion 15a is hereby enabled to wear down evenly, so that the uneven wear problem of the prior art is solved. At the same time, a better grip is maintained on the terrain compared to the embodiments of Figures 5 and 6.

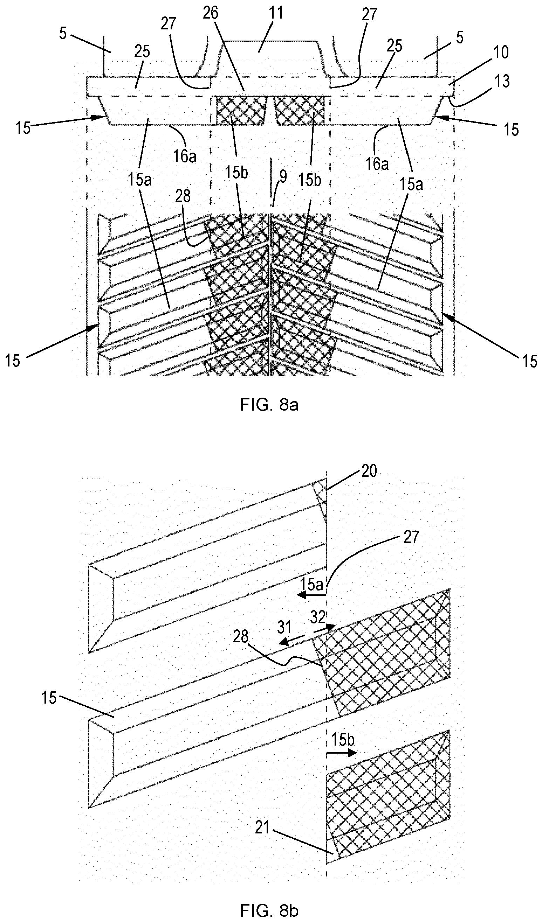

In the embodiment of Figure 7, the interface 28 between the parts of a ground-engaging lug 15 having different resilience is perpendicular to the outer surface 13 of the core 10 and coincides with the boundaries 27 of the contact strips 25. The latter is not a necessary limitation of the invention scope. An embodiment wherein this is not the case is shown in Figures 8a and 8b. The interface 28 between the parts having different resilience is now perpendicular to the longitudinal direction of the lug itself. The definition of the load-bearing portions 15a and 15b remains however the same : the dividing line between these portions is the boundary 27 of one of the contact strips 25, as clarified by the representation of these portions 15a and 15b of one lug 15 in Figure 8b. This image clarifies the distinction in this case between the portions 15a and 15b separated by the boundary 27 and the parts 31 and 32 having different resilience, separated by the interface 28. It is seen that the load-bearing portion 15a is primarily formed of the more rigid, less resilient material except for a small corner portion 20, while the non load-bearing portion 15b is primarily formed of the more resilient material except for a corner portion 21. Overall however, the non load-bearing portion 15b is more resilient than the load-bearing portion 15a, hence this embodiment provides the same benefits as the embodiment of Figure 7. To some extent and as long as said benefit remains enabled, the interface 28, while being perpendicular to the outer surface 13 of the core 10, could be oriented differently from either of the versions shown in Figures 7 or 8 and/or said interface 28 could lie completely to one side or the other of the boundary 27 of the contact strip 25. In any of these embodiments, the non load-bearing portion 15b coincides at least partially with the more resilient part (for example part 32 in the embodiment of Figures 8a and 8b) of the two parts of which each ground-engaging lug 15 is composed.

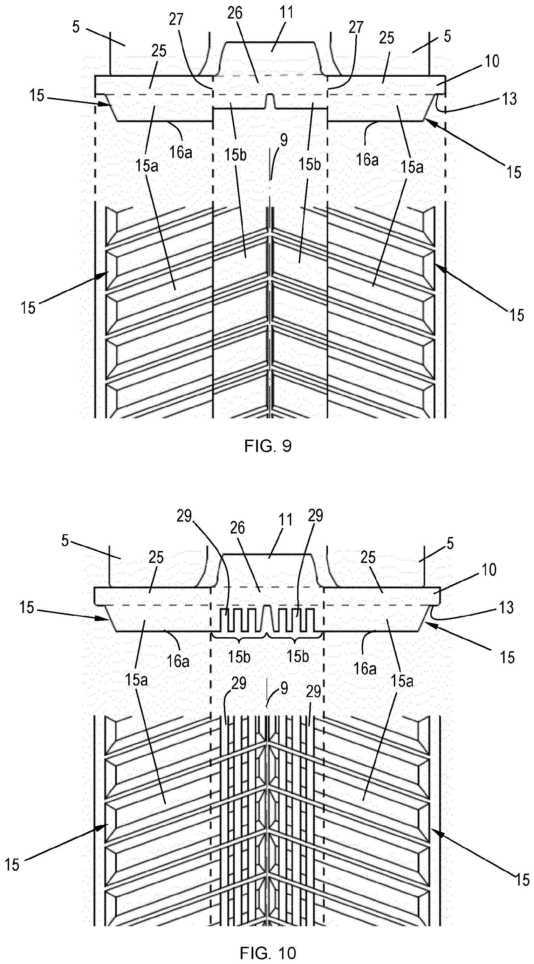

Another embodiment is illustrated in Figure 9. The load-bearing portions 15a of the ground-engaging lugs 15 have the same thickness and resilience as the prior art lugs, but now the non load-bearing portions 15b of the ground-engaging lugs have a lower thickness than the load-bearing portions 15a. The resilience of the non load-bearing portions 15b may be equal to that of the load-bearing portions 15a. The effect is that the load-bearing portions 15a will wear down evenly, while the non load-bearing portions 15b still exert a degree of grip on the terrain. As in the previous embodiment, the separation line between the parts of the lug having higher and lower thickness does not necessarily need to coincide with nor be parallel to the boundary 27 of one of the contact strips 25.

A further embodiment is shown in Figure 10. The load-bearing portions 15a of the ground-engaging lugs 15 have the same thickness and resilience as the prior art lugs, but now the non load-bearing portions 15b comprise grooves 29 through a significant part of their thickness. The resilience of the material of the non load-bearing portions 15b may be the same or more than that of the load-bearing portions 15a. The grooves 29 enable to maintain a grip on the terrain in the central portion 26 of the core, but they are at the same time reducing the contact area with the soil, which is likely to accelerate the wear of this reduced contact area compared to the solid load-bearing portions 15a. In this way, the risk of uneven wear as described above is reduced. In the embodiment shown, the grooves 29 are parallel to the longitudinal direction of the belt track 4, but this orientation may be different, for example perpendicular to the longitudinal direction of the ground-engaging lugs 15 themselves. The number of grooves 29 and the depth of the grooves 29 is not limited to the example shown in Figure 10. In the embodiment shown, the grooves 29 are straight, but the grooves 29 may also follow a zigzag or curved line. The depth and width of the grooves may also vary over the width and/or along the circumference of the belt track 4.

Both the embodiments shown in Figures 9 and 10 are in fact defined by the same characteristic, namely that the non load-bearing portion 15b is at least partially thinner than the load-bearing portion 15a, i.e. it is thinner than the load-bearing portion in at least one or more areas of the non load-bearing portion 15b. In the case of Figure 9, the thickness of the non load-bearing portion 15b is constant and lower than the thickness of the load-bearing portion 15a, while in the case of Figure 10, the thickness of the non load-bearing portion 15b is lower than the thickness of the load-bearing portion 15a in the areas defined by the grooves 29. Other embodiments fall under this generic characteristic of 'at least partially thinner', for example a non load-bearing portion having a gradually decreasing or increasing thickness in at least a part of said non load-bearing portion 15b.

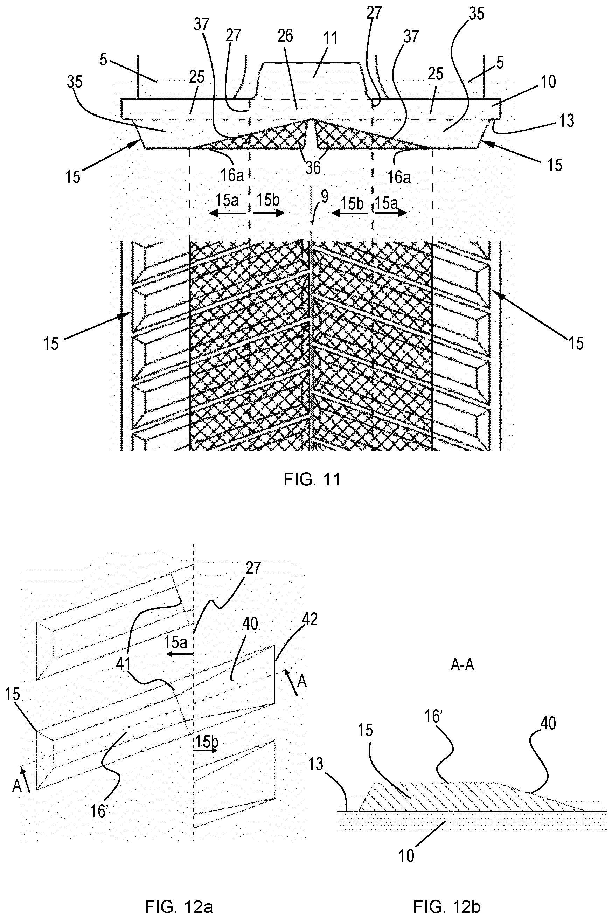

Figure 11 shows another embodiment wherein the non load-bearing portion 15b is more resilient than the load-bearing portion 15a. The load-bearing portion 15a and the non load-bearing portion 15b have the same thickness. However, the ground-engaging lugs 15 are formed as an agglomerate of a first part 35 formed of a material having for example the same order of resilience as a prior art ground-engaging lug, and a second part 36 formed of a more resilient material, wherein the first and second parts 35 and 36 have complementary wedge shapes. The second part 36 is fixed on top of the first part 35 along an interface 37 that forms a downward slope from the side of the load-bearing portion 15a to the side of the non load-bearing portion 15b, said slope crossing a boundary 27 between one of the contact strips 25 and the central portion 26 of the core 10. Therefore, the load-bearing portion 15a is not a solid body formed of a single material, but its resilience is lower than the resilience of the non load-bearing portion 15b that is primarily formed of more resilient material, thereby enabling the same beneficial effect enabled by previously described embodiments.

In any embodiment according to the invention, the load-bearing portion 15a of the lugs comprises a ground contacting surface that is parallel to the outer surface 13 of the core 10, wherein the distance between the ground contacting surface and the outer surface of the core defines the thickness of the load-bearing portion 15a. In the embodiments described above, said ground contacting surface 16a is delimited by one of the boundaries 27 of the contact strips 25, as the thickness of the load-bearing portion 15a is constant up to this boundary.

The latter is however not a limitation of the invention scope, as illustrated in Figures 12a and 12b. This is an example of a ground-engaging lug 15 applicable in a track unit according to the invention, wherein the non load-bearing portion 15b is thinner than the load-bearing portion 15a due to a sloped surface 40 sloping downward from a section 41 of the lug towards the end section 42 of the lug. The section 41 is situated slightly to the left of the boundary 27, i.e. said section 41 lies within said load-bearing portion 15a. The load-bearing portion 15a now has a ground contacting surface 16' that is parallel to the outer surface 13 of the core 10, wherein the ground contacting surface 16' is smaller than the ground contacting surfaces 16a indicated in the previous embodiments. This embodiment nevertheless falls into the scope of the invention, provided that the ground contacting surface 16' is sufficiently large to support the load of the work vehicle. The thickness of the load-bearing portion 15a in this embodiment is defined by the distance between the surface 16' and the outer surface 13 of the core 10.

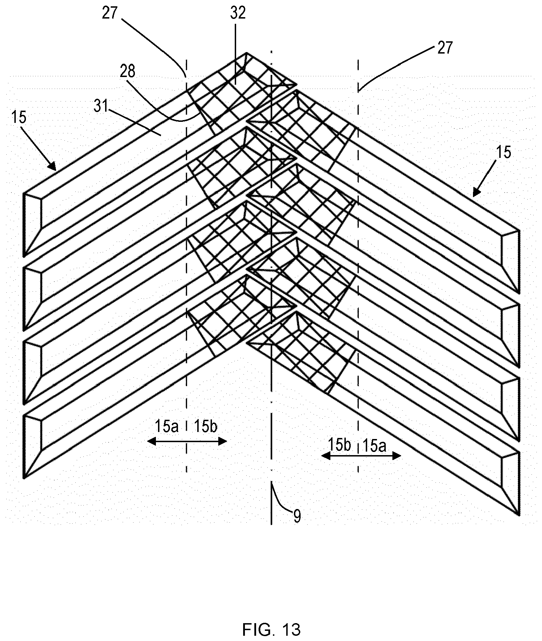

When it is stated in the claims that the two rows of ground-engaging lugs 15 are arranged in two rows extending on either side of the belt track centre line 9 of the belt track, this is not limited to the embodiments shown, wherein the lugs do not overlap the belt track centre line 9. Figure 13 illustrates an embodiment wherein the lugs do overlap the belt track centre line 9 to a small extent. This type of arrangement also falls within the scope of the invention, if the lugs comprise a non load-bearing portion 15b that is thinner or more resilient than the load-bearing portion 15a. This is the case in the embodiment of Figure 13 : the lugs are the same as in Figure 8a and comprise a more rigid part 31 and a more resilient part 32 attached along interface 28, with the non load-bearing portion 15b coinciding partially with the more resilient part 32.

The invention is not limited to the type of track unit represented in Figures 1 and 2, but it is applicable also to other types of track units comprising a track having a core 10 with drive lugs 11 on the inner surface of the core and ground-engaging lugs 15 arranged in two parallel rows on the outer surface of the core. One other type of track unit to which the invention is applicable for example is a track unit that does not comprise a drive sprocket wheel 3 situated centrally above the guide wheels 5 as in the unit shown in Figures 1 and 2, but wherein the drive sprocket wheel is mounted in between two spaced-apart guide wheels 5, or replaces on the guide wheels. Instead of driving the track belt by a sprocket wheel, it can also be driven by a friction drive. This type of unit is therefore flatter than the triangular-shaped units shown in Figures 1 and 2.

## Claims

1. A track unit for a work vehicle (1), the track unit comprising a track unit frame (7), a drive sprocket wheel (3), a belt track (4) having a longitudinal belt track centre line (9), the belt track comprising a core (10) having an outer surface (13) and an inner surface, the track unit further comprising front and rear guide wheels (5) and support rollers (6) which are rotatably mounted on the track unit frame (7), for guiding and supporting the belt track (4), wherein :
- the belt track (4) comprises regularly spaced drive lugs (11) on the inner surface of the core (10) for engaging with the drive sprocket wheel (3), and spaced-apart ground-engaging lugs (15) on the outer surface (13) of the core (10), the ground-engaging lugs being arranged in two rows extending on either side of the belt track centre line (9),
- the front and rear guide wheels (5) and the support rollers (6) are each provided in pairs spaced apart in the direction perpendicular to the belt track centre line (9), so as to allow space for the passage of the drive lugs (11),
- the guide wheels (5) and/or the support rollers (6) are configured to contact the belt track on two contact strips (25) of the core (10), said strips extending on either side of the drive lugs (11), with a central portion (26) of the core (10) extending between the contact strips (25),
- each ground-engaging lug (15) comprises a load-bearing portion (15a), lying within the boundaries of one of the contact strips (25), said load-bearing portion comprising a ground contacting surface (16a, 16') oriented essentially parallel to the outer surface (13) of the core, wherein the distance between said ground contacting surface (16a, 16') and the outer surface (13) of the core (10) defines the thickness of the load-bearing portion (15a),
**characterised in that** :
- either said load-bearing portion (15a) has a uniform resilience and the ground-engaging lugs (15) do not or not substantially overlap said central portion (26) of the core (10),
- or the ground engaging lugs (15) further comprise a non load-bearing portion (15b) that overlaps said central portion (26) of the core, wherein the non load-bearing portion (15b) is at least partially thinner and/or more resilient compared to the load-bearing portion (15a).

2. The track unit according to claim 1, wherein the drive sprocket wheel (3) is mounted above and centrally between the front and rear guide wheels (5).

3. The track unit according to claim 1, wherein one of the guide wheels (5) is the drive sprocket wheel (3).

4. The track unit according to any one of the previous claims, wherein the drive sprocket wheel (3) drives the belt track with friction.

5. The track unit according to any one of the claims 1 to 4, wherein the ground-engaging lugs (15) comprise said non load-bearing portion (15b) overlapping the central portion (26) of the core (10), and wherein the ground-engaging lugs (15) are formed of a first part (15a,31) having a first resilience and a second part (15b,32) being more resilient than the first part and fixed to the first part along an interface (28) that is perpendicular to the outer surface (13) of the core (10), and wherein the non load-bearing portion (15b) coincides at least partially within the second part.

6. The track unit according to any one of the claims 1 to 4, wherein the ground-engaging lugs comprise said non load-bearing portion (15b) overlapping the central portion (26) of the core (10), and wherein said non load-bearing portion (15b) has a constant thickness that is lower than the thickness of the load-bearing portion (15a).

7. The track unit according to any one of the claims 1 to 4, wherein the ground-engaging lugs (15) comprise said non load-bearing portion (15b) overlapping the central portion (26) of the core (10), and wherein said non load-bearing portion (15b) has a gradually decreasing thickness.

8. The track unit according to any one of the claims 1 to 4, wherein the ground-engaging lugs comprise said non load-bearing portion (15b) overlapping the central portion (26) of the core (10), and wherein said non load-bearing portion (15b) comprises one or more grooves (29) so that in said grooves the non load-bearing portion (15b) is thinner than the load-bearing portion (15a).

9. The track unit according to any one of the claims 1 to 4, wherein the ground-engaging lugs comprise said non load-bearing portion (15b) overlapping the central portion (26) of the core (10), and wherein the ground-engaging lugs (15) are formed of a first part (35) having a first resilience and a second part (36) being more resilient than the first part and fixed on top of the first part along an interface (37) that forms a downward slope from the side of the load-bearing portion (15a) to the side of the non load-bearing portion (15b), said slope crossing a boundary (27) between one of the contact strips (25) and the central portion (26) of the core (10).

10. A work vehicle comprising an even number of track units in accordance with any one of the preceding claims.

11. A tractor comprising an even number of track units in accordance with any one of the claims 1 to 9.

12. A combine harvester or a forage harvester comprising an even number of track units in accordance with any one of claims 1 to 9.

13. A method to convert a belt track (4) for use in a track unit (2) according to any one of claims 1 to 4,
the track unit comprising a track unit frame (7), a drive sprocket wheel (3), the belt track (4) having a longitudinal belt track centre line (9), the belt track comprising a core (10) having an outer surface (13) and an inner surface, the track unit further comprising front and rear guide wheels (5) and support rollers (6) which are rotatably mounted on the track unit frame (7), for guiding and supporting the belt track (4);
the belt track (4) comprising regularly spaced drive lugs (11) on the inner surface of the core (10) for engaging with the drive sprocket wheel (3), and spaced-apart ground-engaging lugs (15) on the outer surface (13) of the core (10), the ground-engaging lugs being arranged in two rows extending on either side of the belt track centre line (9),
the front and rear guide wheels (5) and the support rollers (6) being each provided in pairs spaced apart in the direction perpendicular to the belt track centre line (9), so as to allow space for the passage of the drive lugs (11),
the guide wheels (5) and/or the support rollers (6) being configured to contact the belt track on two contact strips (25) of the core (10), said strips extending on either side of the drive lugs (11), with a central portion (26) of the core (10) extending between the contact strips (25),
each ground-engaging lug (15) comprising a load-bearing portion (15a), lying within the boundaries of one of the contact strips (25), said load-bearing portion comprising a ground contacting surface (16a, 16') oriented essentially parallel to the outer surface (13) of the core, wherein the distance between said ground contacting surface (16a, 16') and the outer surface (13) of the core (10) defines the thickness of the load-bearing portion (15a),
the method being **characterized in that** the method comprises at least partially removing the ground-engaging lugs (15) where the ground-engaging lugs overlap said central portion (26) of the core (10).

14. A method according to claim 13, the method being **characterized in that** the method further comprises adding material where the ground-engaging lugs were removed, whereby the added material is more resilient than the material the ground engaging lugs are made of.
